# EUROPÄISCHE PATENTSCHRIFT

(11) **EP 2 121 415 B1**
(45) Veröffentlichungstag und Bekanntmachung des Hinweises auf die Patenterteilung: **06.11.2013**
(21) Anmeldenummer: 08706963.9
(22) Anmeldetag: 07.01.2008
(51) Int. Cl.: B62D 5/04, F16H 7/14

(54) **ELEKTRISCHE SERVOLENKUNG MIT RIEMENANTRIEB UND BERÜHRUNGSLOSER RIEMENSPANNUNG**
ELECTRIC POWER STEERING SYSTEM WITH BELT DRIVE AND CONTACTLESS BELT TENSION
DIRECTION ASSISTÉE ÉLECTRIQUE À ENTRAÎNEMENT PAR COURROIE ET MISE EN TENSION DE LA COURROIE SANS CONTACT

(30) Priorität: 24.01.2007 DE 102007004520
(43) Veröffentlichungstag der Anmeldung: 25.11.2009
(73) Patentinhaber: ThyssenKrupp Presta SteerTec GmbH, 40476 Düsseldorf (DE)
(72) Erfinder: SPENGLER, Matthias, 73666 Baltmannsweiler (DE); KEPPLER, Jens, DE / 72805 Lichtenstein (DE); STOLZENBURG, Jens, 74360 Ilsfeld (DE)
(74) Vertreter: Lenzing Gerber Stute
(86) Internationale Anmeldenummer: PCT/EP2008/000049
(87) Internationale Veröffentlichungsnummer: WO 2008/089881

(56) Entgegenhaltungen:
- DE-A1- 10 052 275
- DE-B- 1 176 440
- JP-A- 2003 220 958
- US-A- 5 997 423

## Beschreibung

Die vorliegende Erfindung betrifft eine elektrische Servolenkung mit den Merkmalen des Oberbegriffs des Anspruchs 1.

Eine solche Servolenkung ist aus der DE 10052275 A1 bekannt. Bei dieser Servolenkung wird eine Lenkunterstützungskraft von einem elektrischen Servomotor erbracht und über eine Riemenscheibe, einen Zahnriemen und ein Untersetzungsgetriebe auf die Zahnstange übertragen. Es ist dabei nicht zuletzt wegen der gewünschten Geräuscharmut erforderlich, das Spiel des Riemenantriebs so gering wie möglich zu machen und insbesondere eine konstante Riemenspannung in beiden Laufrichtungen des Antriebs zu gewährleisten.

Bei der bekannten Servolenkung wird die Vorspannung über eine an der Rückseite des Zahnriemens anliegende Spannrolle bewirkt, die fest eingestellt wird.

Bei anderen elektromechanischen Servolenkungen noch zwei andere Arten der Einstellung der Riemenspannung bekannt. Zum einen kann die Riemenspannung über eine Exzenterscheibe eingestellt werden, zum anderen werden Zugvorrichtungen eingesetzt, die das Motorgehäuse von dem Gehäuse des Lenkgetriebes wegziehen und so den Riemen spannen. Diese Lösungen sind aufwendig und dementsprechend teuer.

Eine weitere Möglichkeit, ein umlaufendes Antriebsmittel in beide Laufrichtungen des Antriebs zu spannen, ist aus der britischen Patentschrift GB 1,117,863 bekannt. Bei dieser Vorrichtung wird ein Kettenantrieb mit einer festen und einer verschieblich gelagerten Welle dadurch gespannt, dass der verschiebliche Lagerbock über einen federvorgespannten Keil von der fest gelagerten Welle weg gedrängt wird.

Eine Riemenspannvorrichtung mit einem Elektromagneten ist aus der Patentanmeldung JP 09257109A bekannt. Hier wird vorgeschlagen, eine Spannrolle über einen Anker von einem Magneten mit der Spannkraft beaufschlagen zu lassen. Diese Spannvorrichtung ist nicht berührungslos.

Aus der Druckschrift DE 2138288 ist die Lehre bekannt, ein umlaufendes Band zur Kräuselung von thermoplatischen Fäden mit magnetisierbaren Partikeln auszurüsten und im Betrieb mittels Magneten in bestimmter Weise zu verformen.

Die Offenlegungsschrift US 5 997 423 offenbart ein Kettengetriebe, das zu Vermeidung von Kettengeräuschen eine Steuereinheit aufweist, die die Kettenspannung misst. Über Elektromagnete wird die über eine aktive Vorspannungstechnik vorliegende Kettenspannung so beeinflusst, dass die Kette sich nach innen oder außen spannt. Schließlich ist aus der DE 1 176 440 ein Riementrieb, bei dem ein Kraftschluss zwischen einem Riemen und einer Riemenscheibe durch dauermagnetische Materialien erhöht werden soll, bekannt. In dem Riemen sind wechselweise Materialien mit unterschiedlicher Polarität eingearbeitet, die mit Materialien in der Riemenschiebe korrespondieren, die ebenfalls wechselweise eine unterschiedliche Polarität aufweisen. Der Riemen ist über der Riemenschiebe derart angeordnet, dass jeweils zwei Materialien mit unterschiedlicher Folarität übereinanderliegend angeordnet sind.

Keine der vorhergehend genannten Schriften offenbart eine passive und berührungslose Spannungseinrichtung für einen Riemenantrieb auf kleinem Raum.

Es ist deshalb Aufgabe der vorliegenden Erfindung, eine Servolenkung der anfangs genannten Art derart zu verbessern, dass eine Riemenspannung erzeugt werden kann, ohne dass zusätzliche Bauelemente wie beispielsweise eine Spannrolle an dem Riemen anliegen, um so einen zusätzlichen Verschleiß des Riemens durch ein Spannelement auszuschließen. Dabei sollen auch zusätzliche aufwendige Einstellelemente vermieden werden.

Diese Aufgabe wird von einer Servolenkung mit der Merkmalen des Anspruchs 1 gelöst.

Weil bei einer elektrischen Servolenkung für ein Kraftfahrzeug mit einer in einem Lenkungsgehäuse axial verschieblich gelagerten Zahnstange, die von einem in einem Motorgehäuse angeordneten elektrischen Servomotor, der von einem Ritzel über einen in einem umgebenden Gehäuseteil verlaufenden Riemen auf ein Getriebe und damit auf die Zahnstange wirkt, zur Lenkunterstützung antreibbar ist, der Riemen ferromagnetisch ausgerüstet ist und in dem Gehäuseteil in radialer Richtung neben dem Riemen und in etwa mittig zwischen dem Getriebe und dem Ritzel wenigstens ein Magnet in einem Abstand von 2 - 4 mm von dem Riemen angeordnet ist, so dass der Riemen unter der magnetischen Anziehungskraft des wenigstens einem Magneten nach außen gezogen und gespannt ist.

Vorzugsweise ist der Riemen ein Zahnriemen.

Die Ausrüstung des Riemens kann derart sein, dass der Riemen ein Stahlgewebe aus einem magnetisierbaren Stahl enthält. Es kann auch vorgesehen sein, dass der Riemen ferromagnetische

Stahlfasern oder Eisenpartikel enthält.

Weiter ist es für eine gleichmäßige Wirkung der Spannvorrichtung in beiden Laufrichtungen des Riemens vorteilhaft, wenn insgesamt zwei Magnete mittig zwischen den Berührungspunkten des Riemens mit den Riemenscheiben neben jedem freien Trum des Riemens angeordnet sind.

Dabei ist ein einfacher Aufbau gegeben, wenn der wenigstens eine Magnet ein Permanentmagnet ist.

Nachfolgend wird ein Ausführungsbeispiel der vorliegenden Erfindung anhand der Zeichnung beschrieben. Es zeigen:
Fig. 1: eine elektrische Servolenkung mit einem achsparallel zur Zahnstange angeordneten Servomotor in einer perspektivischen Darstellung;
Fig. 2: den Servoantrieb der Lenkung aus Fig. 1 in einer Explosionsdarstellung; sowie
Fig. 3: die Lenkung gem. Fig. 1 und Fig. 2 in einem Radialschnitt entlang der Linie III - III aus Fig. 1.

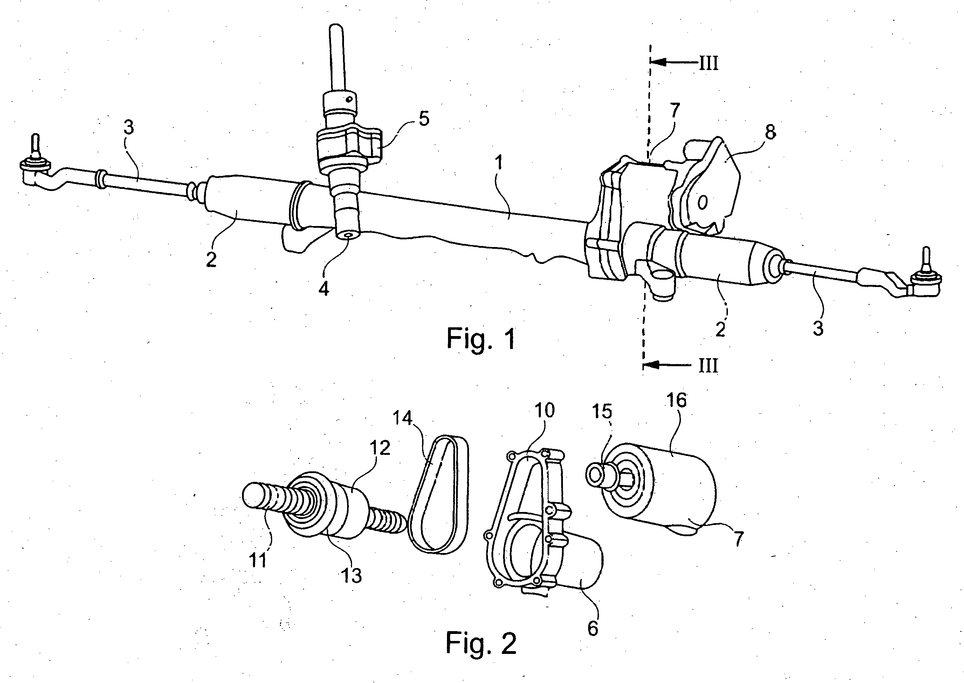

Die Fig. 1 zeigt eine elektrische Servolenkung mit einem Lenkungsgehäuse 1, das eine im Inneren verschieblich gelagerte Zahnstange umgibt. Die Zahnstange trägt endseitig jeweils ein Kugelgelenk, das von einem Faltenbalg 2 umgeben ist. Die Kugelgelenke wiederum tragen jeweils eine Spurstange 3. Ein Ritzelgehäuse 4 umgibt das Lenkritzel, welches mit der Zahnstange kämmt. Das Lenkritzel wiederum ist zur Verbindung mit einer Lenksäule und mit einem Lenkrad eingerichtet. Es trägt weiter einen Drehmomentsensor für die Steuerung der Lenkung, der in einem Sensorgehäuse 5 angeordnet ist.

An dem gegenüber liegenden Ende des Lenkungsgehäuses 1 ist in einem lösbaren Gehäuseteil 6 ein Reduziergetriebe zum Antrieb der Zahnstange angeordnet. Das Gehäuseteil 6 trägt weiter ein Motorgehäuse 7, das in einem Abstand parallel zu dem Lenkungsgehäuse 1 angeordnet ist. Das Motorgehäuse 7 trägt wiederum eine Steuerelektronik 8 zur Ansteuerung des im Motorgehäuse 7 angeordneten Servomotors.

Die Baugruppe des Servoantriebs ist in der Fig. 2 näher dargestellt. Der Gehäuseteil 6 trägt an seiner sichtbaren Flachseite einen Flansch 10 zur Befestigung an dem nicht sichtbaren Lenkungsgehäuse 1. Eine Zahnstange 11 ragt in ihrer Längs- oder Axialrichtung durch den Gehäuseteil 6 hindurch. Die Zahnstange 11 trägt einen Kugelgewindetrieb 12, der mit seinen Kugeln spielfrei in ein entsprechendes Gewinde der Zahnstange 11 eingreift. Der Kugelgewindetrieb 12 ist im Inneren des Gehäuseteils 6 drehbar gelagert. Umfangsseitig weist der Kugelgewindetrieb 12 eine Verzahnung 13 für einen Zahnriemen 14 auf. Der Zahnriemen 14 wiederum läuft innerhalb des Gehäuseteils 6 von dem Kugelgewindetrieb 12 zu einem entsprechend ausgebildeten Ritzel 15 des Servomotors 16, der in dem Motorgehäuse 7 angeordnet ist.

Das Motorgehäuse 7 wird in einer fest vorgegebenen Position an dem Gehäuseteil 6 befestigt.

Das weitere Zusammenwirken der insoweit beschriebenen Komponenten ist aus dem Stand der Technik bekannt und muss hier nicht näher beschrieben werden. Gleiches gilt für die Steuerung und den Betrieb der Servolenkung.

Weiter ist in dem Gehäuse 6 neben dem Zahnriemen ein Magnet 20 angeordnet, und zwar an einer Stelle, die sich etwa mittig neben dem gerade verlaufenden Trum des Zahnriemens 14 zwischen der Verzahnung 13 und dem Ritzel 15 befindet.

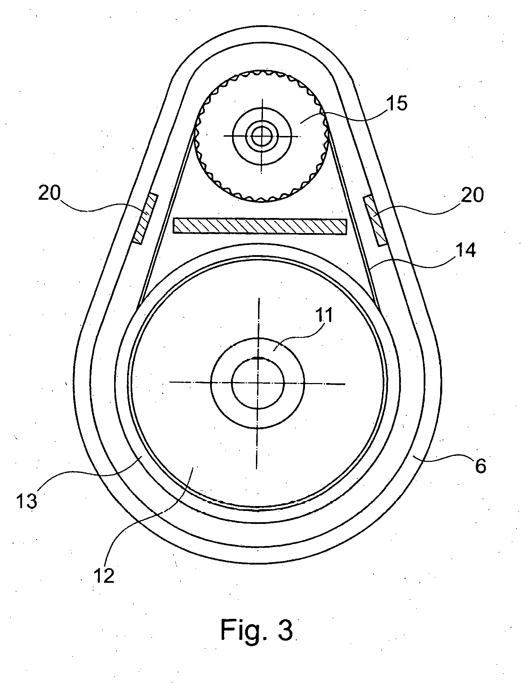

Die Fig. 3 zeigt einen Querschnitt durch die Servolenkung gem. Fig. 1 etwa entlang der Linie III - III aus Fig. 1, also im Bereich des Zahnriemens 14.

Der Gehäuseteil 6 umgibt hier den Antrieb der Servolenkung, der von dem Ritzel 15 des Servomotors 16 über einen Zahnriemen auf di Verzahnung 13 des Kugelgewindetriebs 12 und damit auf die Zahnszange 11 wirkt. Eine Drehung des Ritzels 15 bewirkt so eine axiale Verlagerung der Zahnstange 11. Auf der Innenweite des Gehäuseteils 6 sind insgesamt zwei Magnete 20 angeordnet, und zwar symmetrisch zu der Symmetrieachse des Gehäuseteils 6, die die beiden Mittelpunkte der Zahnstange 11 und des Servomotors 16 verbindet.

Unerwünscht ist, dass sich die Riemenspannung des Zahnriemens 14 im Laufe der Nutzung verringert und dadurch ein Spiel auftritt, das besonders bei Drehrichtungsumkehr des Servoantriebs nachteilig bemerkbar wird. Es würde zu Geräuschen und eventuell schlecht definierten Zuständen der vorgeschalteten Regelung führen. Auch können sich Schwingungen in dem jeweils unbelasteten Trum aufbauen. Der Zahnriemen 14 ist deshalb ferromagnetisch ausgerüstet, beispielsweise durch ein eingearbeitetes Stahlgewebe, Stahlfasern oder Eisenpartikel. Im Wirkungsbereich der Magnete 20 wird der Zahnriemen 14 unter der magnetischen Anziehung nach außen gezogen und so gespannt. Der Aufbau von Schwingungen wird hierdurch unterbunden.

Die Magnete 20 können Permanentmagnete sein, aber auch Elektromagnete. Der Luftspalt zwischen den Magneten 20 und dem Zahnriemen 14 ist im Bereich von wenigen Millimetern betragen: 2 - 4 mm, da der Zahnriemen 14 zu Beginn seiner Betriebslebensdauer gespannt wird und die zu erwartende Längung im Betrieb sehr gering ist. So ist gewährleistet, dass die Anziehungskraft auf den Zahnriemen 14 aufgrund des geringen Luftspaltes hinreichend groß ist.

### Bezugszeichenliste

1. Lenkungsgehäuse
2. Faltenbalg
3. Spurstange
4. Lenkritzelgehäuse
5. Sensorgehäuse
6. Gehäuseteil
7. Motorgehäuse
8. Steuerelektronik
10. Flansch
11. Zahnstange
12. Kugelgewindetrieb
13. Verzahnung
14. Zahnriemen
15. Ritzel
16. Servomotor
20. Magnete

## Patentansprüche

1. Elektrische Servolenkung für ein Kraftfahrzeug mit einer in einem Lenkungsgehäuse (1) axial verschieblich gelagerten Zahnstange (11), die von einem in einem Motorgehäuse (7) angeordneten elektrischen Servomotor (16), der von einem Ritzel (15) über einen in einem umgebenden Gehäuseteils (6) verlaufenden Riemen (14) auf ein Getriebe (12) und damit auf die Zahnstange (11) wirkt, zur Lenkunterstützung antreibbar ist, **dadurch gekennzeichnet, dass** der Riemen (14) ferromagnetisch ausgerüstet ist und dass in dem Gehäuseteil (6) in radialer Richtung neben dem Riemen (14) und in etwa mittig zwischen dem Getriebe (12) und dem Ritzel (15) wenigstens ein Magnet (20) in einem Abstand von 2 - 4 mm von dem Riemen (14) angeordnet ist, so dass der Riemen (14) unter der magnetischen Anziehungskraft des wenigstens einem Magneten (20) nach außen gezogen und gespannt ist.

2. Servolenkung nach Anspruch 1, **dadurch gekennzeichnet, dass** der Riemen (14) ein Zahnriemen ist.

3. Servolenkung nach einem der vorhergehenden Ansprüche, **dadurch gekennzeichnet, dass** der Riemen (14) ein Stahlgewebe enthält.

4. Servolenkung nach einem der vorhergehenden Ansprüche, **dadurch gekennzeichnet, dass** der Riemen (14) Eisenpartikel enthält.

5. Servolenkung nach einem der vorhergehenden Ansprüche, **dadurch gekennzeichnet, dass** insgesamt zwei Magnete (20) mittig zwischen den Berührungspunkten des Riemens (14) mit den Riemenscheiben (13, 15) neben jedem freien Trum des Riemens (14) angeordnet sind.

6. Servolenkung nach einem der vorhergehenden Ansprüche, **dadurch gekennzeichnet, dass** der wenigstens eine Magnet (20) ein Permanentmagnet ist.

## Claims

1. Electric power steering system for a motor vehicle having a steering rack (11) axially displaceably mounted in a steering housing (1), which steering rack can be driven by an electrical servo motor (16) arranged in a motor housing (7) to support steering, which servo motor acts on a gear mechanism (12) and thus on the steering rack (11) from a pinion (15) via a belt (14) running in a surrounding housing part (6), **characterised in that** the belt (14) is ferromagnetically treated and **in that** at least one magnet (20) is arranged at a distance of 2 - 4 mm from the belt (14) in the housing part (6) in the radial direction adjacent to the belt (14) and approximately centrally between the gearing mechanism (12) and the pinion (15), such that the belt (14) is drawn outwards and tensioned under the magnetic force of attraction of the at least one magnet (20).

2. Power steering system according to Claim 1, **characterised in that** the belt (14) is a toothed belt.

3. Power steering system according to any one of the preceding claims, **characterised in that** the belt (14) contains a steel mesh.

4. Power steering system according to any one of the preceding claims, **characterised in that** the belt (14) contains iron particles.

5. Power steering system according to any one of the preceding claims, **characterised in that** in total, two magnets (20) are arranged centrally between the contact points of the belt (14) with the belt pulleys (13, 15) adjacent to each free run of the belt (14).

6. Power steering system according to any one of the preceding claims, **characterised in that** the at least one magnet (20) is a permanent magnet.

## Revendications

1. Direction assistée, électrique, pour un véhicule automobile, comprenant une crémaillère (11), qui est montée axialement coulissante dans un carter de direction (1), et peut être entraînée, pour une assistance de direction, par un servomoteur électrique (16) agencé dans un carter de moteur (7) et agissant à partir d'un pignon (15), sur une transmission (12) et ainsi sur la crémaillère (11), par l'intermédiaire d'une courroie (14) s'étendant dans une partie de carter (6) enveloppante,
**caractérisée en ce que** la courroie (14) est équipée d'un système ferromagnétique, et **en ce que** dans la partie de carter (6) est agencé, dans la direction radiale à côté de la courroie (14) et environ de manière centrale entre la transmission (12) et le pignon (14), au moins un aimant (20), à une distance de 2 - 4 mm de la courroie (14), de sorte que la courroie (14) est tirée vers l'extérieur et mise en tension sous l'effet de la force d'attraction magnétique dudit au moins un aimant (20).

2. Direction assistée selon la revendication 1, **caractérisée en ce que** la courroie (14) est une courroie crantée.

3. Direction assistée selon l'une des revendications précédentes, **caractérisée en ce que** la courroie (14) renferme un tissu d'acier.

4. Direction assistée selon l'une des revendications précédentes, **caractérisée en ce que** la courroie (14) renferme des particules de fer.

5. Direction assistée selon l'une des revendications précédentes, **caractérisée en ce qu'**au total deux aimants (20) sont agencés de manière centrale entre les points de contact de la courroie (14) avec les poulies (13, 15), à côté de chaque brin libre de la courroie (14).

6. Direction assistée selon l'une des revendications précédentes, **caractérisée en ce que** ledit au moins un aimant (20) est un aimant permanent.
